# EUROPEAN PATENT APPLICATION

(11) **EP 3 163 887 A1**
(43) Date of publication of application: **03.05.2017**
(21) Application number: 16174029.5
(22) Date of filing: 10.06.2016
(51) Int. Cl.: H04N 21/43, H04N 21/436, H04N 21/4363, H04N 21/439

(54) **METHOD AND APPARATUS FOR PERFORMING MEDIA SYNCHRONIZATION**

(30) Priority: 29.10.2015 CN 201510717967
(71) Applicant: Xiaomi Inc., Beijing 100085 (CN)
(72) Inventor: TAN, Kangxi, 100085 Haidian District (CN); WANG, Yongzhi, 100085 Haidian District (CN); HUANG, Zhonghui, 100085 Haidian District (CN)
(74) Representative: Reeve, Nicholas Edward

(57) **Abstract**

The present disclosure provides a method for performing media synchronization. The method includes: extracting (101) a first media file and a second media file from a media file to be played, the first media file being played at a wireless output end, and the second media file being played at a local output end; dynamically monitoring (102) a wireless transmission delay of the first media file; and adaptively adjusting (103) play time of the second media file at the local output end based on the monitored wireless transmission delay of first media file, such that first media file and second media file are synchronously played. The problem of non-synchronized playing of media files at wireless output end and local output end due to wireless transmission delay generated at wireless output end when a split-type device plays the media file may be prevented, which is favorable to improving user experience.

## Description

### TECHNICAL FIELD

The present disclosure relates to the field of communications, and more particularly, to a method and an apparatus for performing media synchronization.

### BACKGROUND

A split-type television generally refers to separating a display part, a signal processing part and a sound system of the television from each other, which breaks through the structure and style in a traditional television of integrating these three parts as a whole. For example, a split-type television may be constituted by a television display terminal, a television host device, and a television speaker. However, just due to such a special design of the split-type television, when a media file is played by the split-type television, the problem of non-synchronized media may be present because of unstable wireless transmission.

### SUMMARY OF THE INVENTION

To overcome the problem in the related art, the present disclosure provides a method and an apparatus for performing media synchronization.

According to a first aspect of embodiments of the present disclosure, a method for performing media synchronization is provided. The method includes: extracting a first media file and a second media file from a media file to be played, the first media file being played at a wireless output end, and the second media file being played at a local output end; dynamically monitoring a wireless transmission delay of the first media file; and adaptively adjusting play time of the second media file at the local output end based on the monitored wireless transmission delay of the first media file, such that the first media file and the second media file are synchronously played.

Optionally, the dynamically monitoring a wireless transmission delay of the first media file includes: selecting a key frame from the first media file; transmitting the selected key frame to the wireless output end according to a frame sequence, and recording a transmitting time point of the key frame; and receiving a reception time point of the key frame reported by the wireless output end, and calculating the wireless transmission delay of the key frame based on the reception time point and the transmitting time point, to dynamically monitor the transmission delay of the first media file.

Optionally, the selecting a key frame from the first media file includes: selecting the key frame from the first media file based on a predetermined frame interval.

Optionally, a predetermined mark is pre-added into the selected key frame, the predetermined mark being configured to trigger the wireless output end to report the reception time point of the key frame.

Optionally, the adaptively adjusting play time of the second media file based on the monitored wireless transmission delay of the first media file includes: delay-sending the second media file to the local output end based on the calculated wireless transmission delay of the first media file, to adaptively adjust the play time of the second media file at the local output end.

Optionally, the method further includes: periodically performing clock synchronization with the wireless output end.

According to a second aspect of embodiments of the present disclosure, an apparatus for performing media synchronization is provided. The apparatus includes: an extracting module, configured to extract a first media file and a second media file from a media file to be played, the first media file being played at a wireless output end, and the second media file being played at a local output end; a monitoring module, configured to dynamically monitor a wireless transmission delay of the first media file; and an adjusting module, configured to adaptively adjust play time of the second media file at the local output end based on the wireless transmission delay of the first media file monitored by the monitoring module, such that the first media file and the second media file are synchronously played.

Optionally, the monitoring module includes: a selecting submodule, configured to select a key frame from the first media file; a transmitting submodule, configured to transmit the selected key frame to the wireless output end according to a frame sequence, and record a transmitting time point of the key frame; and a receiving submodule, configured to receive a reception time point of the key frame reported by the wireless output end; and a calculating submodule, configured to calculate the wireless transmission delay of the key frame based on the reception time point received by the receiving submodule and the transmitting time point, to dynamically monitor the transmission delay of the first media file.

Optionally, the selecting submodule includes: a selecting unit, configured to select the key frame from the first media file based on a predetermined frame interval.

Optionally, a predetermined mark is pre-added into the selected key frame, the predetermined mark being configured to trigger the wireless output end to report the reception time point of the key frame.

Optionally, the adjusting module includes: a sending submodule, configured to delay-send the second media file to the local output end based on the wireless transmission delay of the first media file calculated by the calculating submodule, to adaptively adjust the play time of the second media file at the local output end.

Optionally, the monitoring module further includes: a synchronizing submodule, configured to periodically perform clock synchronization with the wireless output end.

According to a third aspect of embodiments of the present disclosure, an apparatus for use in media synchronization is provided. The apparatus includes: a processor; and a memory for storing instructions executable by the processor; wherein the processor is configured to: extract a first media file and a second media file from a media file to be played, the first media file being played at a wireless output end, and the second media file being played at a local output end; dynamically monitor a wireless transmission delay of the first media file; and adaptively adjust play time of the second media file at the local output end based on the monitored wireless transmission delay of the first media file, such that the first media file and the second media file are synchronously played.

According to a fourth aspect of embodiments of the present disclosure, there is provided a computer program which, when being executed on a processor of an apparatus, performs any one of the above methods.

The technical solutions provided in the embodiments of the present disclosure may achieve the following beneficial effects: According to the embodiments of the present disclosure, a first media file to be played at a wireless output end and a second media file to be played at a local output end are extracted from a media file to be played, a wireless transmission delay of the first media file is dynamically monitored, and play time of the second media file at the local output end is adaptively adjusted based on the monitored wireless transmission delay of the first media file, such that the first media file and the second media file are synchronously played. In this way, the problem of non-synchronized playing of the media files at the wireless output end and the local output end due to the wireless transmission delay generated at the wireless output end when a split-type device plays the media file may be prevented, which is favorable to improving user experience.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
Fig. 1 is a schematic flowchart illustrating a method for performing media synchronization according to an exemplary embodiment of the present disclosure;
Fig. 2 is a schematic flowchart illustrating another method for performing media synchronization according to an exemplary embodiment of the present disclosure;
Fig. 3 is a schematic block diagram illustrating an apparatus for performing media synchronization according to an exemplary embodiment of the present disclosure;
Fig. 4 is a schematic block diagram illustrating another apparatus for performing media synchronization according to an exemplary embodiment of the present disclosure;
Fig. 5 is a schematic block diagram illustrating still another apparatus for performing media synchronization according to an exemplary embodiment of the present disclosure;
Fig. 6 is a schematic block diagram illustrating yet still another apparatus for performing media synchronization according to an exemplary embodiment of the present disclosure;
Fig. 7 is a schematic block diagram illustrating yet still another apparatus for performing media synchronization according to an exemplary embodiment of the present disclosure; and
Fig. 8 is a schematic structural diagram illustrating an apparatus for use in media synchronization according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terminology used in the present disclosure is for the purpose of describing particular embodiments only and is not intended to limit the present disclosure. As used in the present disclosure and the appended claims, the singular forms "a", "an" and "the" are intended to include the plural forms as well, unless the context clearly indicates otherwise. It shall also be understood that the term "and/or" used herein is intended to signify and include any or all possible combinations of one or more of the associated listed items.

It shall be understood that, although the terms "first", "second", "third", etc. may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if" may be understood to mean "when" or "upon" or "in response to determining" depending on the context.

When a split-type television plays a media file, if the media file is a mixed media file, the split-type television may generally extract media files from the mixed media file, and respectively play the extracted media files at a wireless output end and a local output end, thereby achieving a good play effect.

However, since the media file played at the wireless output end is generally transmitted based on wireless communication which is easily subjected to interference caused by the environment, during playing of the media file by the split-type television, the media file played at the wireless output end and the media file played at the local output end may be not synchronously played due to a delay generated during sending of the media file to the wireless output end.

For example, using the scenario where the split-type television plays a mixed audio file as an example, under this scenario, a woofer which establishes a wireless connection with the split-type television is the wireless output end, and a loudspeaker on the split-type television is the local output end. When playing the mixed audio file, the split-type television may extract bass audio data and ordinary audio data from the mixed audio file by using a built-in audio codec module (Audio Codec).

Upon extracting the bass audio data and the ordinary audio data from the mixed audio file, the split-type television may directly transmit the extracted ordinary audio data to a local loudspeaker. The loudspeaker plays the ordinary audio data. The split-type television transmits the extracted bass audio data to the woofer via a built-in wireless module (for example, a WiFi module). The woofer plays the bass audio data.

However, since wireless communication is easily subjected to environmental interference, during transmission of data from the split-type television to the woofer in a wireless manner, a transmission delay may be generated. The transmission delay may dynamically change according to the extent of the environmental interference. Therefore, the bass audio data played by the wireless woofer may be not synchronized with the ordinary audio data played by the local loudspeaker, which brings poor user experience.

Accordingly, during traditional implementation, when the split-type television plays the media file, the wireless transmission delay generated at the wireless output end may cause the problem of non-synchronized playing of the media files at the wireless output end and the local output end.

To solve the above problem, this embodiment provides a media synchronization solution. According to the solution, a first media file to be played at a wireless output end and a second media file to be played at a local output end are extracted from a media file to be played, a wireless transmission delay of the first media file is dynamically monitored, and play time of the second media file at the local output end is adaptively adjusted based on the monitored wireless transmission delay of the first media file, such that the first media file and the second media file are synchronously played. In this way, the problem of non-synchronized playing of the media files at the wireless output end and the local output end due to the wireless transmission delay generated at the wireless output end when a split-type device plays the media file may be prevented, which is favorable to improving user experience.

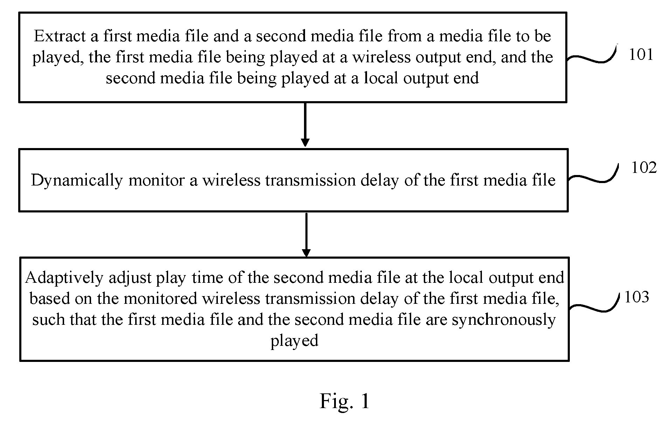

Referring to Fig. 1, Fig. 1 illustrates a method for performing media synchronization according to an exemplary embodiment of the present disclosure. The method for performing media synchronization is applied in a split-type terminal, and includes the following steps.

In step 101, a first media file and a second media file are extracted from a media file to be played, wherein the first media file is to be played at a wireless output end, and the second media file is to be played at a local output end. The media file to be played may be a mixed media file as discussed above for example.

In step 102, a wireless transmission delay of the first media file is dynamically monitored.

In step 103, play time of the second media file at the local output end is adaptively adjusted based on the monitored wireless transmission delay of the first media file, such that the first media file and the second media file are synchronously played.

In this embodiment, a split-type terminal may include a split-type television or home entertainment system, a split-type conference terminal, a split-type camera, or any other split-type device capable of playing a media file. For example, during implementation, besides the split-type television, the split-type conference terminal, and the split-type camera, the split-type terminal may also be a PC terminal or a mobile terminal equipped with a wireless output end (for example, a wireless woofer) and a local output end (for example, a loudspeaker or a display screen). The media file may be a mixed media file. For example, the mixed media file may be an audio file constituted by bass audio data and ordinary audio data, or may be a video file constituted by audio data and video data. The term wireless output end and a local output end, will therefore be understood to refer to output or playback devices or terminals that are part of the split-type or distributed A/V system.

Detailed description is given hereinafter by using the case where the split-type terminal is a split-type television as an example.

In this embodiment, when the split-type television plays a media file, if the media file is a mixed media file, a first media file to be played at the wireless output end and a second media file to be played at the local output end may be extracted from the media file by using a built-in codec module.

For example, when the media file is an audio file, the first media file may be bass audio data extracted from the audio file, and the second media file may be ordinary audio data extracted from the audio file. When the media file is a video file, the first media file may be audio data extracted from the video file, and the second media file may be video data extracted from the video file.

The detailed process of extracting the media files by using the codec module is not described further in this embodiment. For details of this process, a person skilled in the art may refer to description in the related art to practice the technical solutions of the present disclosure.

When the first media file and the second media file are extracted from the media file, the split-type television may wirelessly transmit the first media file to the wireless output end via a wireless connection established with the wireless output end, and dynamically monitor the wireless transmission delay at the wireless output end.

The split-type television may dynamically monitor the wireless transmission delay during wireless output by means of selecting a key frame from the first media file and dynamically monitoring the transmitting time point of the selected key frame and the reception time point of the key frame reported by the wireless output end.

In an illustrated implementation manner, upon extracting the first media file and the second media file from the media file by using the codec module, the split-type television may select several key frames from the first media file. During selection of the key frames, the split-type television may select the key frame based on a predetermined frame interval. For example, the key frame may be selected based on a fixed frame interval. To be specific, data of frames 1, 11, 21...in the first media file may be selected as the key frames based on a frame interval of 10 frames. Alternatively, the key frames may be selected based on a fixed time interval. For example, a key frame may be selected each two seconds according to a playing sequence of frames. In this manner, it is not necessary to select all the data frames in the first media file as the key frames, which saves the calculation resources of the split-type television.

Upon selecting the key frame, the split-type television may also add a predetermined mark into the selected key frame. The predetermined mark may be a mark configured to trigger the wireless output end to report the reception time point of the key frame to the split-type television. Upon adding the predetermined mark into the selected key frames, the split-type television may sequentially transmit the selected key frames to the wireless output end by using a built-in wireless module according to a frame sequence, and record the transmitting time point. Upon receiving the data frame of the first media file transmitted by the split-type television, the wireless output end may firstly check whether the received data frame carries the predetermined mark. If the predetermined mark is carried, the data frame is a key frame, and in this case, the wireless output end may immediately report the reception time point of the key frame to the split-type television.

Upon receiving the reception time point of the key frame reported by the wireless output end, the split-type television may calculate a difference between the reception time point and the transmitting time point of the key frame, to obtain a wireless transmission delay of each key frame. Accordingly, in this manner, the split-type television may constantly transmit the key frames to the wireless output end, and dynamically monitor the wireless transmission delay at the wireless output end by means of monitoring the reception time point of the key frame reported by the wireless output end.

It should be noted that the split-type television may also periodically perform clock synchronization with the wireless output end, to ensure as much as possible that the reception time point and transmitting time point of the key frame are recorded based on the same clock, such that the error of the calculated wireless transmission delay is reduced. For example, during implementation, both the split-type television and the wireless output end may employ the clock of a CPU, that is, the clock of the CPU may be used as a reference for calibration.

In this embodiment, upon receiving the reception time point of a key frame reported by the wireless output end and calculating the wireless transmission delay according to the reception time point and a locally recorded transmitting time point, the split-type television may immediately and adaptively adjust the play time of the second media file at the local output end according to the wireless transmission delay, such that the first media file and the second media file are synchronously played.

The split-type television adaptively adjusts the play time of the second media file at the local output end. The adaptive adjustment of the play time may be achieved by means of delay-sending the second media file to the local output end according to the calculated wireless transmission delay.

For example, assume that the reception time point of a key frame reported by the wireless output end and received by the split-type television is T2, and the locally recorded transmitting time point of the key frame is T1, then the wireless transmission delay may be represented by a difference between T1 and T2. In this case, the wireless transmission delay Δt=T2-T1. When the split-type television calculates and obtains Δt, the split-type television may delay the time point of sending the second media file to the local output device by Δt, such that it is ensured that the first media file and the second media file are synchronously played.

Nevertheless, after the split-type television adaptively adjusts the play time of the second media file at the local output end according to the above manner, if further receiving the reception time point of a next key frame reported by the wireless output end, the split-type television may calculate the wireless transmission delay again according to the recorded transmitting time point of the key frame, and then further adaptively adjust the play time of the second media file at the local output end.

Accordingly, in this manner, the wireless output end may constantly report the wireless transmission delays of the key frames to the split-type television, and the split-type television may constantly adaptively adjust the play time of the second media file at the local output end according to the wireless transmission delays constantly reported by the wireless output end. In this way, the effect caused by the wireless transmission delay generated at the wireless output end on the second media file played at the local output end may be eliminated at the greatest extent, and it is ensured that the first media file and the second media file are synchronously played.

Description is given hereinafter by using the case where the media file is an audio file and the case where the media file is a video file as examples respectively.

In this embodiment, the basic architecture of the split-type television may include an audio codec module (audio codec), a video codec module (video codec), a CPU, a loudspeaker, a display, a wireless module, a wireless woofer, and a wireless soundbox. The audio codec module is respectively connected to the CPU and the loudspeaker in a wired manner, and the video codec module is respectively connected to the CPU and the display in a wired manner. The CPU is connected to the wireless module in a wired manner. The wireless module is respectively connected to the wireless woofer and the wireless soundbox in a wireless manner.

In one aspect, if the media file is an audio file, the first media file may be bass audio data extracted from the audio file. The second media file may be ordinary audio data extracted from the audio file. The woofer may be a wireless output end. The loudspeaker is a local output end.

In an initial state, when the split-type television plays the audio file, the audio codec module may continuously read, according to a frame sequence, the audio data frames from an audio track to be played, and then extract bass audio data and ordinary audio data from the read audio data frames. The extracted bass audio data and ordinary audio data still maintain a frame sequence of the original audio file. When the audio file includes a plurality of audio tracks to be played, the audio data may be simultaneously read from the plurality of audio tracks.

Upon completion of extraction of the data, the audio codec module may further select a key frame based on a predetermined frame interval, and add into the selected key frame a predetermined mark, the predetermined mark being configured to trigger the woofer to report the reception time point T2 of the key frame to the audio codec module. The predetermined mark may also be added by the CPU.

After the predetermined mark is added into the selected key frame, the audio codec module may transmit the bass audio data frame to the woofer, and record the transmitting time point T1 of the key frame. Upon receiving the bass audio data frame, the woofer may check whether the data frame carries the predetermined mark. If the predetermined mark is carried, the data frame is a key frame. In this case, the woofer may report the reception time point T2 of the key frame to the audio codec module, and then continue receiving next frame of bass audio data and repeat the above process.

Upon receiving the reception time point T2 of the key frame reported by the woofer, the audio codec module may calculate a difference Δt between T2 and the recorded transmitting time point T1 of the key frame. In this case, the difference Δt is a wireless transmission delay of the bass audio data, and the audio codec module may delay the time point of sending the ordinary audio data to the loudspeaker by Δt, thereby ensuring that the bass audio data and the ordinary audio data are synchronously played. The audio codec module and the wireless woofer may use the clock of the CPU as a reference to periodically perform clock synchronization, to ensure the accuracy of the recorded transmitting time point or reception time point, and thus reduce the error of the calculated wireless transmission delay.

Nevertheless, during implementation, the woofer may report the reception time point T2 of the key frame to the CPU; and the CPU calculates the wireless transmission delay Δt, and then controls the audio codec module to delay the time point of sending the ordinary audio data to the loudspeaker by Δt.

In another aspect, if the media file is a video file, the first media file may be audio data extracted from the video file, and the second media file may be video data extracted from the video file. The wireless soundbox is a wireless output end, and the display is a local output end.

In an initial state, when the split-type television plays the video file, the video codec module may continuously read, according to a frame sequence, the video data frames from the video file to be played, and then extract audio data and video data from the read video data frames. The extracted audio data and video data still maintain a frame sequence of the original video file.

Upon completion of extraction of the data, the video codec module may further select a key frame based on a predetermined frame interval, and add into the selected key frame a predetermined mark, the predetermined mark being configured to trigger the wireless soundbox to report the reception time point T2 of the key frame to the video codec module. The predetermined mark may also be added by the CPU.

After the predetermined mark is added into the selected key frame, the video codec module may transmit the audio data frame to the wireless soundbox, and record the transmitting time point T1 of the key frame. Upon receiving the audio data frame, the wireless soundbox may check whether the data frame carries the predetermined mark. If the predetermined mark is carried, the data frame is a key frame. In this case, the wireless soundbox may report the reception time point T2 of the key frame to the video codec module, and then continue receiving next frame of audio data and repeat the above process.

Upon receiving the reception time point T2 of the key frame reported by the wireless soundbox, the video codec module may calculate a difference Δt between T2 and the recorded transmitting time point T1 of the key frame. In this case, the difference Δt is a wireless transmission delay of the audio data, and the video codec module may delay the time point of sending the video data to the display by Δt, thereby ensuring that the audio data and the video data are synchronously played.

The video codec module and the wireless soundbox may use the clock of the CPU as a reference to periodically perform clock synchronization, to ensure the accuracy of the recorded transmitting time point or reception time point, and thus reduce the error of the calculated wireless transmission delay.

Likewise, during implementation, the wireless soundbox may report the reception time point T2 of the key frame to the CPU; and the CPU calculates the wireless transmission delay Δt, and then controls the video codec module to delay the time point of sending the video data to the display by Δt.

As seen from the above examples, in this manner, the wireless output end may constantly report the wireless transmission delays of the key frames to the split-type television, and the split-type television may constantly and adaptively adjust the play time of the second media file at the local output end according to the wireless transmission delays constantly reported by the wireless output end. In this way, the effect caused by the wireless transmission delay generated at the wireless output end and exerted on the second media file played at the local output end may be eliminated at the greatest extent, and it is ensured that the first media file and the second media file are synchronously played.

In the above embodiment, a first media file to be played at a wireless output end and a second media file to be played at a local output end are extracted from a media file to be played, a wireless transmission delay of the first media file is dynamically monitored, and play time of the second media file at the local output end is adaptively adjusted based on the monitored wireless transmission delay of the first media file, such that the first media file and the second media file are synchronously played. In this way, the problem of non-synchronized playing of the media files at the wireless output end and the local output end due to the wireless transmission delay generated at the wireless output end when a split-type device plays the media file may be prevented, which is favorable to improving user experience.

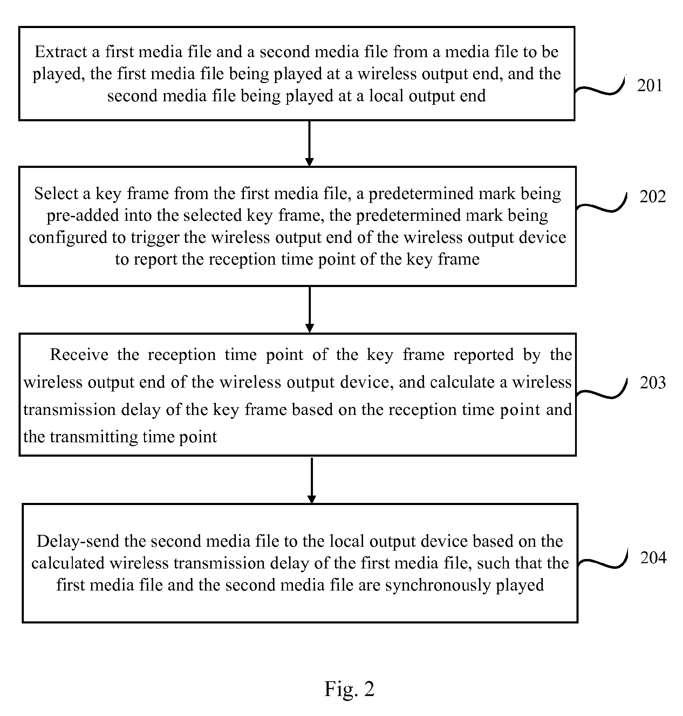

Referring to Fig. 2, Fig. 2 illustrates a method for performing media synchronization according to an exemplary embodiment of the present disclosure. The method for performing media synchronization is applied in a split-type terminal, and includes the following steps.

In step 201, a first media file and a second media file are extracted from a media file to be played, wherein the first media file is to be played at a wireless output end, and the second media file is to be played at a local output end.

In step 202, a key frame is selected from the first media file, wherein a predetermined mark is pre-added into the selected key frame, the predetermined mark being configured to trigger the wireless output end to report the reception time point of the key frame.

In step 203, a reception time point of the key frame reported by the wireless output end is received, and a wireless transmission delay of the key frame is calculated based on the reception time point and the transmitting time point.

In step 204, based on the calculated wireless transmission delay of the first media file, the second media file is delay-sent to the local output device, such that the first media file and the second media file are synchronously played.

In this embodiment, a split-type terminal may include a split-type television, a split-type conference terminal, a split-type camera, or any other split-type device capable of playing a media file. For example, during implementation, besides the split-type television, the split-type conference terminal, and the split-type camera, the split-type terminal may also be a PC terminal or a mobile terminal equipped with a wireless output end (for example, a wireless woofer) and a local output end (for example, a loudspeaker or a display screen). The media file may be a mixed media file. For example, the mixed media file may be an audio file constituted by bass audio data and ordinary audio data, or may be a video file constituted by audio data and video data.

Detailed description is given hereinafter by using the case where the split-type terminal is a split-type television as an example.

In this embodiment, when the split-type television plays a media file, if the media file is a mixed media file, a first media file to be played at the wireless output end and a second media file to be played at the local output end may be extracted from the media file by using a built-in codec module.

For example, when the media file is an audio file, the first media file may be bass audio data extracted from the audio file, and the second media file may be ordinary audio data extracted from the audio file. When the media file is a video file, the first media file may be audio data extracted from the video file, and the second media file may be video data extracted from the video file.

The detailed process of extracting the media files by using the codec module is not described further in this embodiment. For details of this process, a person skilled in the art may refer to description in the related art to practice the technical solutions of the present disclosure.

Upon extracting the first media file and the second media file from the media file, the split-type television may wirelessly transmit the first media file to the wireless output terminal via a wireless connection established with the wireless output end, and dynamically monitor the wireless transmission delay at the wireless output end.

The split-type television may dynamically monitor the wireless transmission delay during wireless output by means of selecting a key frame from the first media file and dynamically monitoring the transmitting time point of the selected key frame and the reception time point of the key frame reported by the wireless output end.

In an illustrated implementation manner, upon extracting the first media file and the second media file from the media file by using the codec module, several key frames may be selected from the first media file. During selection of the key frames, the split-type television may select the key frame based on a predetermined frame interval. For example, the key frame may be selected based on a fixed frame interval. To be specific, data of frames 1, 11, 21...in the first media file may be selected as the key frames based on a frame interval of 10 frames. Alternatively, the key frames may be selected based on a fixed time interval. For example, a key frame may be selected each two seconds according to a playing sequence of frames. In this manner, it is not necessary to select all the data frames in the first media file as the key frames, which saves the calculation resources of the split-type television.

Upon selecting the key frame, the split-type television may also add a predetermined mark into the selected key frame. The predetermined mark may be a mark configured to trigger the wireless output end to report the reception time point of the key frame to the split-type television. Upon adding the predetermined mark into the selected key frames, the split-type television may sequentially transmit the selected key frames to the wireless output end by using a built-in wireless module according to a frame sequence, and record the transmitting time point. Upon receiving the data frame of the first media file transmitted by the split-type television, the wireless output end may firstly check whether the received data frame carries the predetermined mark. If the predetermined mark is carried, the data frame is a key frame, and in this case, the wireless output end may immediately report the reception time point of the key frame to the split-type television.

Upon receiving the reception time point of the key frame reported by the wireless output end, the split-type television may calculate a difference between the reception time point and the transmitting time point of the key frame, to obtain a wireless transmission delay of each key frame. Accordingly, in this manner, the split-type television may constantly transmit the key frame to the wireless output end, and dynamically monitor the wireless transmission delay at the wireless output end by means of monitoring the reception time point of the key frame reported by the wireless output end.

It should be noted that the split-type television may also periodically perform clock synchronization with the wireless output end, to ensure as much as possible that the reception time point and transmitting time point of the key frame are recorded based on the same clock, such that the error of the calculated wireless transmission delay is reduced. For example, during implementation, both the split-type television and the wireless output end may employ the clock of a CPU, that is, the clock of the CPU may be used as a reference for calibration.

In this embodiment, upon receiving the reception time point of a key frame reported by the wireless output end and calculating the wireless transmission delay according to the reception time point and a locally recorded transmitting time point, the split-type television may immediately and adaptively adjust the play time of the second media file at the local output end according to the wireless transmission delay, such that the first media file and the second media file are synchronously played.

The split-type television adaptively adjusts the play time of the second media file at the local output end. The adaptive adjustment of the play time may be achieved by means of delay-sending the second media file to the local output end according to the calculated wireless transmission delay.

For example, assume that the reception time point of a key frame reported by the wireless output end and received by the split-type television is T2, and the locally recorded transmitting time point of the key frame is T1, then the wireless transmission delay may be represented by a difference between T1 and T2. In this case, the wireless transmission delay Δt=T2-T1. When the split-type television calculates and obtains Δt, the split-type television may delay the time point of sending the second media file to the local output device by Δt, such that it is ensured that the first media file and the second media file are synchronously played.

Nevertheless, after the split-type television adaptively adjusts the play time of the second media file at the local output end according to the above manner, if further receiving the reception time point of a next key frame reported by the wireless output end, the split-type television may calculate the wireless transmission delay again according to the recorded transmitting time point of the key frame, and then further adaptively adjust the play time of the second media file at the local output end.

Accordingly, in this manner, the wireless output end may constantly report the wireless transmission delays of the key frames to the split-type television, and the split-type television may constantly and adaptively adjust the play time of the second media file at the local output end according to the wireless transmission delays constantly reported by the wireless output end. In this way, the effect caused by the wireless transmission delay generated at the wireless output end and exerted on the second media file played at the local output end may be eliminated at the greatest extent, and it is ensured that the first media file and the second media file are synchronously played.

Description is given hereinafter by using the case where the media file is an audio file and the case where the media file is a video file as examples respectively.

In this embodiment, the basic architecture of the split-type television may include an audio codec module (audio codec), a video codec module (video codec), a CPU, a loudspeaker, a display, a wireless module, a wireless woofer, and a wireless soundbox. The audio codec module is respectively connected to the CPU and the loudspeaker in a wired manner, and the video codec module is respectively connected to the CPU and the display in a wired manner. The CPU is connected to the wireless module in a wired manner. The wireless module is respectively connected to the wireless woofer and the wireless soundbox in a wireless manner.

In one aspect, if the media file is an audio file, the first media file may be bass audio data extracted from the audio file. The second media file may be ordinary audio data extracted from the audio file. The woofer may be a wireless output end. The loudspeaker is a local output end.

In an initial state, when the split-type television plays the audio file, the audio codec module may continuously read, according to a frame sequence, the audio data frames from an audio track to be played, and then extract bass audio data and ordinary audio data from the read audio data frames. The extracted bass audio data and ordinary audio data still maintain a frame sequence of the original audio file. When the audio file includes a plurality of audio tracks to be played, the audio data may be simultaneously read from the plurality of audio tracks.

Upon completion of extraction of the data, the audio codec module may further select a key frame based on a predetermined frame interval, and add into the selected key frame a predetermined mark, the predetermined mark being configured to trigger the woofer to report the reception time point T2 of the key frame to the audio codec module. The predetermined mark may also be added by the CPU.

After the predetermined mark is added into the selected key frame, the audio codec module may transmit the bass audio data frame to the woofer, and record the transmitting time point T1 of the key frame. Upon receiving the bass audio data frame, the woofer may check whether the data frame carries the predetermined mark. If the predetermined mark is carried, the data frame is a key frame. In this case, the woofer may report the reception time point T2 of the key frame to the audio codec module, and then continue receiving next frame of bass audio data and repeat the above process.

Upon receiving the reception time point T2 of the key frame reported by the woofer, the audio codec module may calculate a difference Δt between T2 and the recorded transmitting time point T1 of the key frame. In this case, the difference Δt is a wireless transmission delay of the bass audio data, and the audio codec module may delay the time point of sending the ordinary audio data to the loudspeaker by Δt, thereby ensuring that the bass audio data and the ordinary audio data are synchronously played. The audio codec module and the wireless woofer may use the clock of the CPU as a reference to periodically perform clock synchronization, to ensure the accuracy of the recorded transmitting time point or reception time point, and thus reduce the error of the calculated wireless transmission delay.

Nevertheless, during implementation, the woofer may report the reception time point T2 of the key frame to the CPU; and the CPU calculates the wireless transmission delay Δt, and then controls the audio codec module to delay the time point of sending the ordinary audio data to the loudspeaker by Δt.

In another aspect, if the media file is a video file, the first media file may be audio data extracted from the video file, and the second media file may be video data extracted from the video file. The wireless soundbox is a wireless output end, and the display is a local output end.

In an initial state, when the split-type television plays the video file, the video codec module may continuously read, according to a frame sequence, the video data frames from the video file to be played, and then extract audio data and video data from the read video data frames. The extracted audio data and video data still maintain a frame sequence of the original video file.

Upon completion of extraction of the data, the video codec module may further select a key frame based on a predetermined frame interval, and add into the selected key frame a predetermined mark, the predetermined mark being configured to trigger the wireless soundbox to report the reception time point T2 of the key frame to the video codec module. The predetermined mark may also be added by the CPU.

After the predetermined mark is added into the selected key frame, the video codec module may transmit the audio data frame to the wireless soundbox, and record the transmitting time point T1 of the key frame. Upon receiving the audio data frame, the wireless soundbox may check whether the data frame carries the predetermined mark. If the predetermined mark is carried, the data frame is a key frame. In this case, the wireless soundbox may report the reception time point T2 of the key frame to the video codec module, and then continue receiving next frame of audio data and repeat the above process.

Upon receiving the reception time point T2 of the key frame reported by the wireless soundbox, the video codec module may calculate a difference Δt between T2 and the recorded transmitting time point T1 of the key frame. In this case, the difference Δt is a wireless transmission delay of the audio data, and the video codec module may delay the time point of sending the video data to the display by Δt, thereby ensuring that the audio data and the video data are synchronously played.

The video codec module and the wireless soundbox may use the clock of the CPU as a reference to periodically perform clock synchronization, to ensure the accuracy of the recorded transmitting time point or reception time point, and thus reduce the error of the calculated wireless transmission delay.

Likewise, during implementation, the wireless soundbox may report the reception time point T2 of the key frame to the CPU; and the CPU calculates the wireless transmission delay Δt, and then controls the video codec module to delay the time point of sending the video data to the display by Δt.

As seen from the above examples, in this manner, the wireless output end may constantly report the wireless transmission delays of the key frames to the split-type television, and the split-type television may constantly and adaptively adjust the play time of the second media file at the local output end according to the wireless transmission delays constantly reported by the wireless output end. In this way, the effect caused by the wireless transmission delay generated at the wireless output end and exerted on the second media file played at the local output end may be eliminated at the greatest extent, and it is ensured that the first media file and the second media file are synchronously played.

In the above embodiment, a first media file to be played at a wireless output end and a second media file to be played at a local output end are extracted from a media file to be played, a wireless transmission delay of the first media file is dynamically monitored, and play time of the second media file at the local output end is adaptively adjusted based on the monitored wireless transmission delay of the first media file, such that the first media file and the second media file are synchronously played. In this way, the problem of non-synchronized playing of the media files at the wireless output end and the local output end due to the wireless transmission delay generated at the wireless output end when a split-type device plays the media file may be prevented, which is favorable to improving user experience.

Corresponding to the above embodiment of the method for performing media synchronization, the present disclosure further provides an embodiment of an apparatus for performing media synchronization.

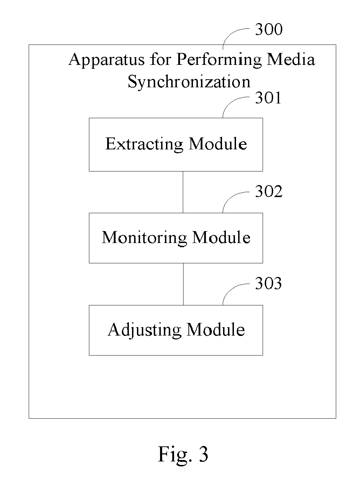

Fig. 3 is a schematic block diagram illustrating an apparatus for performing media synchronization according to an exemplary embodiment of the present disclosure.

As illustrated in Fig. 3, an apparatus 300 for performing media synchronization according to an exemplary embodiment of the present disclosure is provided. The apparatus 300 includes: an extracting module 301, a monitoring module 302, and an adjusting module 303.

The extracting module 301 is configured to extract a first media file and a second media file from a media file to be played, the first media file being played at a wireless output end, and the second media file being played at a local output end.

The monitoring module 302 is configured to dynamically monitor a wireless transmission delay of the first media file.

The adjusting module 303 is configured to adaptively adjust play time of the second media file at the local output end based on the wireless transmission delay of the first media file monitored by the monitoring module 302, such that the first media file and the second media file are synchronously played.

In the above embodiment, a first media file to be played at a wireless output end and a second media file to be played at a local output end are extracted from a media file to be played, a wireless transmission delay of the first media file is dynamically monitored, and play time of the second media file at the local output end is adaptively adjusted based on the monitored wireless transmission delay of the first media file, such that the first media file and the second media file are synchronously played. In this way, the problem of non-synchronized playing of the media files at the wireless output end and the local output end due to the wireless transmission delay generated at the wireless output end when a split-type device plays the media file may be prevented, which is favorable to improving user experience.

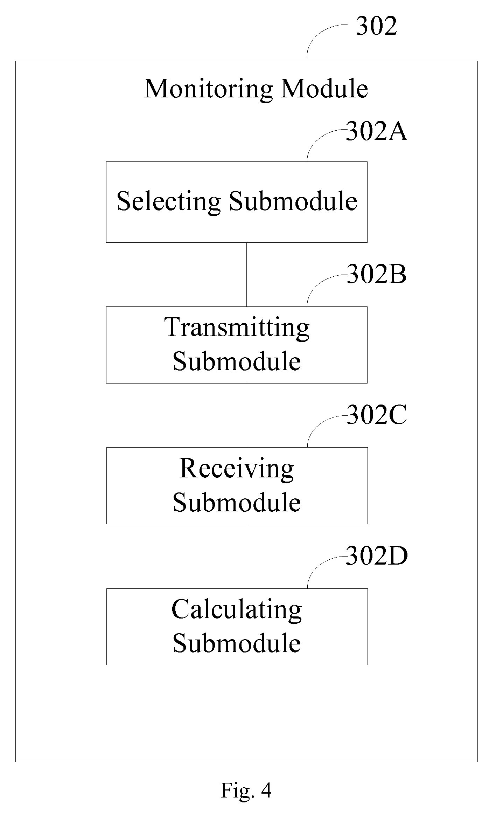

Referring to Fig. 4, Fig. 4 is a block diagram illustrating another apparatus according to an exemplary embodiment of the present disclosure. Based on the embodiment as illustrated in Fig. 3, in this embodiment, the monitoring module 302 may include: a selecting submodule 302A, a transmitting submodule 302B, a receiving submodule 302C, and a calculating submodule 302D.

The selecting submodule 302A is configured to select a key frame from the first media file.

The transmitting submodule 302B is configured to transmit the selected key frame to the wireless output end according to a frame sequence, and record a transmitting time point of the key frame.

The receiving submodule 302C is configured to receive a reception time point of the key frame reported by the wireless output end.

The calculating submodule 302D is configured to calculate the wireless transmission delay of the key frame based on the reception time point received by the receiving submodule 302C and the transmitting time point, to dynamically monitor the transmission delay of the first media file.

In the above embodiment, a predetermined mark is pre-added into the selected key frame, the predetermined mark being configured to trigger the wireless output end to report the reception time point of the key frame.

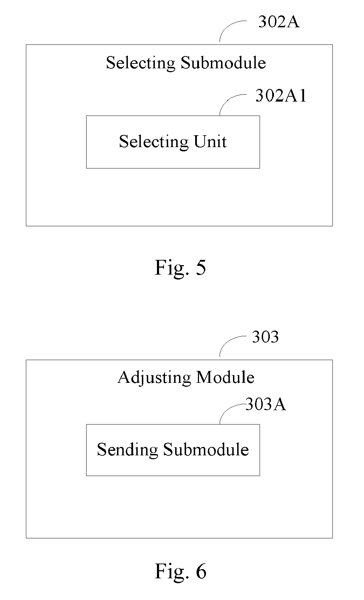

Referring to Fig. 5, Fig. 5 is a block diagram of still another apparatus according to an exemplary embodiment of the present disclosure. Based on the embodiment as illustrated in Fig. 4, in this embodiment, the selecting submodule 302A may include a selecting unit 302A1.

The selecting unit 302A1 is configured to select the key frame from the first media file based on a predetermined frame interval.

It shall be noted that, the structure of the selecting unit 302A1 in the apparatus embodiment as illustrated in Fig. 5 may also be included in the apparatus embodiments as illustrated in Fig. 3, which is not limited in the present disclosure.

Referring to Fig. 6, Fig. 6 is a block diagram of yet still another apparatus according to an exemplary embodiment of the present disclosure. Based on the embodiment as illustrated in Fig. 3, in this embodiment, the adjusting module 303 may include a sending submodule 303A.

The sending submodule 303A is configured to delay-send the second media file to the local output device based on the wireless transmission delay of the first media file calculated by the calculating submodule 302D, to adaptively adjust the play time of the second media file at the local output end.

It shall be noted that, the structure of the sending submodule 303A in the apparatus embodiment as illustrated in Fig. 6 may also be included in the apparatus embodiments as illustrated in Fig. 4 or Fig. 5, which is not limited in the present disclosure.

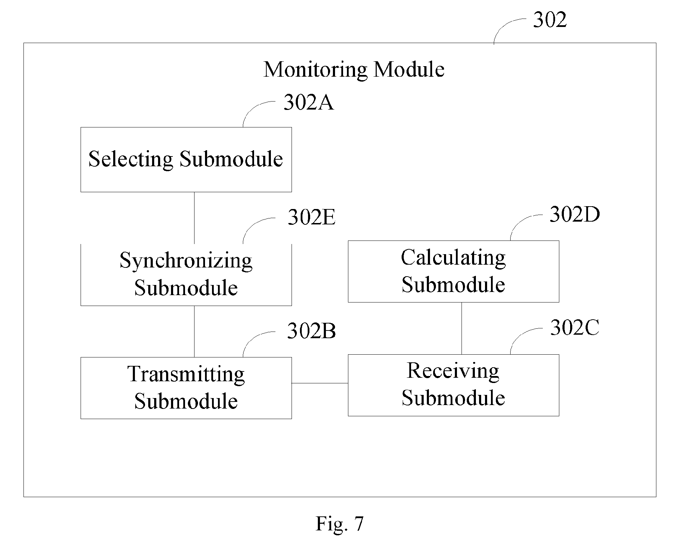

Referring to Fig. 7, Fig. 7 is a block diagram of yet still another apparatus according to an exemplary embodiment of the present disclosure. Based on the embodiment as illustrated in Fig. 4, in this embodiment, the monitoring module 302 may further include a synchronizing submodule 302E.

The synchronizing submodule 302E is configured to periodically perform clock synchronization with the wireless output end.

It shall be noted that, the structure of the synchronizing submodule 302E in the apparatus embodiment as illustrated in Fig. 7 may also be included in the apparatus embodiments as illustrated in Fig. 3, or Fig. 5, or Fig. 6, which is not limited in the present disclosure.

Specific implementation of functions and effects of various modules or units in the above apparatuses may be referenced to the implementation of the corresponding steps in the methods, which is thus not described herein any further.

With respect to the apparatus embodiments, since the apparatus embodiments are based on the method embodiments, relevant parts may be referenced to the equivalents in the method embodiments. The above-described apparatus embodiments are merely exemplary. The modules or units described as separate components may be or may not be physically independent of each other. The element illustrated as a module or unit may be or may not be a physical module or unit, that is, may be either located at a position or deployed on a plurality of network modules or units. Part of or all of the modules or units may be selected as required to implement the technical solutions disclosed in the embodiments of the present disclosure. By the disclosure, persons of ordinary skills in the art may understand and implement the embodiments without any creative effort.

Further, where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Correspondingly, the present disclosure further provides an apparatus for use in media synchronization. The apparatus includes: a processor; and a memory for storing instructions executable by the processor; wherein the processor is configured to: extract a first media file and a second media file from a media file to be played, the first media file being played at a wireless output end, and the second media file being played at a local output end; dynamically monitor a wireless transmission delay of the first media file; and adaptively adjust play time of the second media file at the local output end based on the monitored wireless transmission delay of the first media file, such that the first media file and the second media file are synchronously played.

Correspondingly, the present disclosure further provides a split-type terminal. The terminal may include a memory and at least one program, wherein at least one program is stored in the memory, and is configured to be run by at least one processor to execute instructions, contained in the at least one program, for performing the following operations: extracting a first media file and a second media file from a media file to be played, the first media file being played at a wireless output end, and the second media file being played at a local output end; dynamically monitoring a wireless transmission delay of the first media file; and adaptively adjusting play time of the second media file at the local output end based on the monitored wireless transmission delay of the first media file, such that the first media file and the second media file are synchronously played.

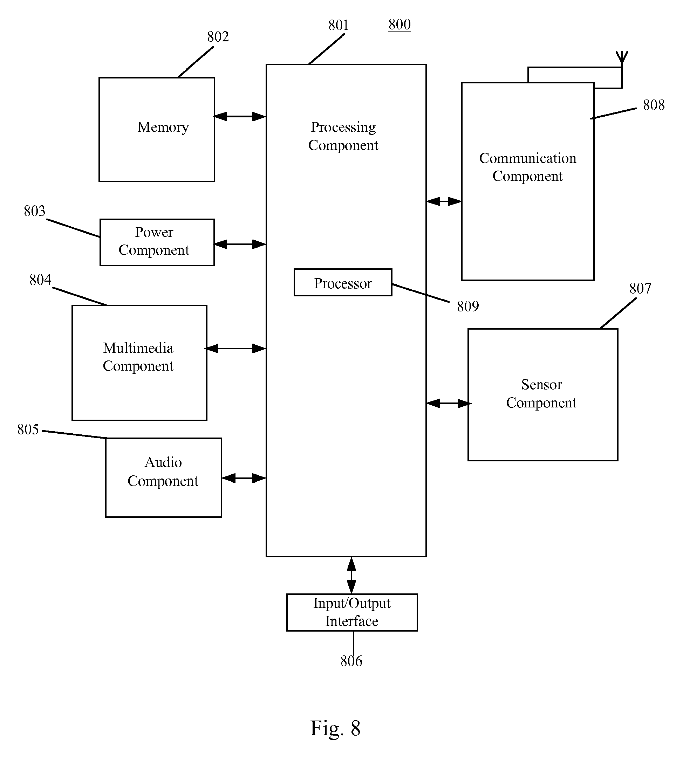

Fig. 8 is a schematic structural diagram illustrating an apparatus for use in media synchronization according to an exemplary embodiment of the present disclosure.

As illustrated in Fig. 8, an apparatus 800 for use in media synchronization is provided according to an exemplary embodiment. The apparatus 800 may be a mobile phone, a smart device, a computer, a digital broadcast terminal, a messaging device, a gaming console, a tablet, a medical device, exercise equipment, a personal digital assistant, and the like.

Referring to Fig. 8, the apparatus 800 may include one or more of the following components: a processing component 801, a memory 802, a power component 803, a multimedia component 804, an audio component 805, an input/output (I/O) interface 806, a sensor component 807, and a communication component 808.

The processing component 801 typically controls overall operations of the apparatus 800, such as the operations associated with display, telephone calls, data communications, camera operations, and recording operations. The processing component 801 may include one or more processors 809 to execute instructions to perform all or a part of the steps in the above-described methods. In addition, the processing component 801 may include one or more modules which facilitate the interaction between the processing component 801 and other components. For example, the processing component 801 may include a multimedia module to facilitate the interaction between the multimedia component 804 and the processing component 801.

The memory 802 is configured to store various types of data to support the operations of the apparatus 800. Examples of such data include instructions for any application or method operated on the apparatus 800, contact data, phonebook data, messages, pictures, videos, and the like. The memory 802 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 803 provides power to various components of the apparatus 800. The power component 803 may include a power management system, one or more power supplies, and other components associated with the generation, management, and distribution of power in the apparatus 800.

The multimedia component 804 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 804 includes a front camera and/or a rear camera. The front camera and/or the rear camera may receive external multimedia data while the apparatus 800 is in an operation mode, such as a photographing mode or a video mode. Each of the front camera and the rear camera may be a fixed optical lens system or have focus and optical zoom capability.

The audio component 805 is configured to output and/or input audio signals. For example, the audio component 805 includes a microphone (MIC) configured to receive an external audio signal when the apparatus 800 is in an operation mode, such as a call mode, a recording mode, or a voice recognition mode. The received audio signal may be further stored in the memory 802 or transmitted via the communication component 808. In some embodiments, the audio component 805 further includes a speaker to output audio signals.

The I/O interface 806 provides an interface between the processing component 801 and a peripheral interface module, such as a keyboard, a click wheel, a button, or the like. The buttons may include, but are not limited to, a home button, a volume button, a starting button, and a locking button.

The sensor component 807 includes one or more sensors to provide status assessments of various aspects of the apparatus 800. For example, the sensor component 807 may detect an open/closed status of the apparatus 800, relative positioning of components, e.g., the display and the keypad, of the apparatus 800; and the sensor component 807 may further detect a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 807 may include a proximity sensor configured to detect the presence of nearby objects without any physical contact. The sensor component 807 may also include a light sensor, such as a CMOS or CCD image sensor, for use in imaging applications. In some embodiments, the sensor component 807 may also include an accelerometer sensor, a gyroscope sensor, a magnetic sensor, a pressure sensor, or a temperature sensor.

The communication component 808 is configured to facilitate wired or wireless communications between the apparatus 800 and other devices. The apparatus 800 may access a wireless network based on a communication standard, such as WiFi, 2G, or 3G, or a combination thereof. In one exemplary embodiment, the communication component 808 receives a broadcast signal or broadcast associated information from an external broadcast management system via a broadcast channel. In one exemplary embodiment, the communication component 808 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 802, executable by the processor 809 in the apparatus 800, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

When instructions stored in the storage medium are executed by a processor of a mobile terminal, the mobile terminal is enabled to perform a method for performing media synchronization, including: extracting a first media file and a second media file from a media file to be played, the first media file being played at a wireless output end, and the second media file being played at a local output end; dynamically monitoring a wireless transmission delay of the first media file; and adaptively adjusting play time of the second media file at the local output end based on the monitored wireless transmission delay of the first media file, such that the first media file and the second media file are synchronously played.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A method for performing media synchronization, comprising:
extracting (101, 201) a first media file and a second media file from a media file to be played, the first media file being played at a wireless output end, and the second media file being played at a local output end;
dynamically monitoring (102) a wireless transmission delay of the first media file; and
adaptively adjusting (103) the play time of the second media file at the local output end based on the monitored wireless transmission delay of the first media file, such that the first media file and the second media file are synchronously played.

2. The method according to claim 1, wherein the dynamically monitoring (102) a wireless transmission delay of the first media file comprises:
selecting (202) a key frame from the first media file;
transmitting the selected key frame to the wireless output end according to a frame sequence, and recording a transmitting time point of the key frame; and
receiving (203) a reception time point of the key frame reported by the wireless output end, and calculating the wireless transmission delay of the key frame based on the reception time point and the transmitting time point, to dynamically monitor the transmission delay of the first media file.

3. The method according to claim 2, wherein the selecting (202) a key frame from the first media file comprises: selecting the key frame from the first media file based on a predetermined frame interval.

4. The method according to claim 2 or 3, wherein a predetermined mark is pre-added into the selected key frame, the predetermined mark being configured to trigger the wireless output end to report the reception time point of the key frame.

5. The method according to claim 2, 3, or 4, wherein the adaptively adjusting (103) the play time of the second media file based on the monitored wireless transmission delay of the first media file comprises: delay-sending (204) the second media file to the local output end based on the calculated wireless transmission delay of the first media file, to adaptively adjust the play time of the second media file at the local output end.

6. The method according to claim 2, wherein the method further comprises: periodically performing clock synchronization with the wireless output end.

7. An apparatus (300) for performing media synchronization, comprising:
an extracting module (301), configured to extract a first media file and a second media file from a media file to be played, the first media file being played at a wireless output end, and the second media file being played at a local output end;
a monitoring module (302), configured to dynamically monitor a wireless transmission delay of the first media file; and
an adjusting module (303), configured to adaptively adjust play time of the second media file at the local output end based on the wireless transmission delay of the first media file monitored by the monitoring module, such that the first media file and the second media file are synchronously played.

8. The apparatus according to claim 7, wherein the monitoring module (302) comprises:
a selecting submodule (302A), configured to select a key frame from the first media file;
a transmitting submodule (302B), configured to transmit the selected key frame to the wireless output end according to a frame sequence, and record a transmitting time point of the key frame;
a receiving submodule (302C), configured to receive a reception time point of the key frame reported by the wireless output end; and
a calculating submodule (302D), configured to calculate the wireless transmission delay of the key frame based on the reception time point received by the receiving submodule and the transmitting time point, to dynamically monitor the transmission delay of the first media file.

9. The apparatus according to claim 8, wherein the selecting submodule (302A) comprises: a selecting unit (302A1), configured to select the key frame from the first media file based on a predetermined frame interval.

10. The apparatus according to claim 8 or 9, wherein a predetermined mark is pre-added into the selected key frame, the predetermined mark being configured to trigger the wireless output end to report the reception time point of the key frame.

11. The apparatus according to any of claims 7 to 10, wherein the adjusting module (303) comprises: a sending submodule (303A), configured to delay-send the second media file to the local output end based on the wireless transmission delay of the first media file calculated by the calculating submodule, to adaptively adjust the play time of the second media file at the local output end.

12. The apparatus according to any of claims 7 to 11, wherein the monitoring module (302) further comprises: a synchronizing submodule (302E), configured to periodically perform clock synchronization with the wireless output end.

13. An apparatus for use in media synchronization, comprising:
a processor (809); and
a memory (802) for storing instructions executable by the processor (809);
wherein the processor (809) is configured to:
extract a first media file and a second media file from a media file to be played, the first media file being played at a wireless output end, and the second media file being played at a local output end;
dynamically monitor a wireless transmission delay of the first media file; and
adaptively adjust play time of the second media file at the local output end based on the monitored wireless transmission delay of the first media file, such that the first media file and the second media file are synchronously played.

14. A computer program which, when being executed on a processor of an apparatus, performs a method according to any one of claims 1 to 6.
